(19) **Europäisches Patentamt European Patent Office Office européen des brevets**

(11) **EP 1 202 290 B1**

(12) **EUROPEAN PATENT SPECIFICATION**

(45) Date of publication and mention
of the grant of the patent:
**04.12.2013 Bulletin 2013/49**

(51) Int Cl.:
*G21B 3/00* (2006.01)     *G21G 1/04* (2006.01)

(21) Application number: **01402812.0**

(22) Date of filing: **30.10.2001**

(54) **Nuclide transmutation device and nuclide transmutation method**

Nukliden-Transmutationsvorrichtung und Nukliden-Transmutationsverfahren

Dispositif de transmutation de nuclides et procédé de transmutation de nuclides

(84) Designated Contracting States:
**DE FR GB IT**

(30) Priority: **31.10.2000 JP 2000333640**
**03.07.2001 JP 2001201875**

(43) Date of publication of application:
**02.05.2002 Bulletin 2002/18**

(73) Proprietor: **MITSUBISHI HEAVY INDUSTRIES, LTD.**
**Tokyo 100-8315 (JP)**

(72) Inventors:
• **Iwamura, Yasuhiro**
**Yokohama,**
**Kanagawa-ken (JP)**
• **Itoh, Takehiko**
**Yokohama,**
**Kanagawa-ken (JP)**
• **Sakano, Mitsuru**
**Yokohama,**
**Kanagawa-ken (JP)**

(74) Representative: **Intès, Didier Gérard André et al**
**Cabinet Beau de Loménie**
**158, rue de l'Université**
**75340 Paris Cedex 07 (FR)**

(56) References cited:
**DE-A- 4 009 604     DE-A- 19 649 511**

• **PATENT ABSTRACTS OF JAPAN vol. 1999, no. 13, 30 November 1999 (1999-11-30) & JP 11 231081 A (MITSUBISHI HEAVY IND LTD), 27 August 1999 (1999-08-27)**
• **IWAMURA Y ET AL: "Detection of anomalous elements, X-ray, and excess heat in a D/sub 2/-Pd system and its interpretation by the electron-induced nuclear reaction model" FUSION TECHNOLOGY, JULY 1998, ANS, USA, vol. 33, no. 4, pages 476-492, XP000779029 ISSN: 0748-1896**

**Description**

BACKGROUND OF THE INVENTION

Field of the Invention

The present invention relates to a nuclide transmutation device and a nuclide transmutation method associated, for example, with disposal processes in which long-lived radioactive waste is transmuted into short-lived radioactive nuclides or stable nuclides, and technologies that generate rare earth elements from abundant elements found in the natural world.

Description of the Related Art

Conventional disposal processes are known that include, for example, methods in which large amounts of long-lived radioactive nuclides included in high level radioactive waste and the like are efficiently and effectively transmuted in a short time. Examples of these methods are those in which small amounts of nuclide are transmuted, such as heavy element synthesis by a nuclear fusion reaction using a heavy ion accelerator.

These disposal processes are nuclide transmutation processes in which minor actinides such as Np, Am, and Cm included in high level radioactive waste, long-lived radioactive products of nuclear fission such as Tc-99 and I-129, exothermic Sr-90 and Cs-137, and useful platinum group elements such as Rh and Pd are separated depending on the properties of each of the elements (group separation), and subsequently causing a nuclear reaction by desorption of neutrons, the minor actinides having a long half-life and nuclear fission products, and transmuted into short-lived radioactive or non-radioactive nuclides. In addition, the useful elements and the long-lived radioactive nuclides included in the high level radioactive waste are separated and recovered, effective use of the elements is implemented, and at the same time, long-lived radioactive nuclides are transmuted into short-lived radioactive or stable nuclides.

Three types of disposal processing methods are known: disposal processing for actinides and the like by neutron irradiation in a nuclear reactor such as a fast breeder reactor or an actinide burn reactor; nuclear spallation processing for actinides and the like by neutron irradiation in an accelerator, and disposal processing of cesium, strontium, and the like by gamma ray irradiation in an accelerator.

By neutron irradiation in a nuclear reactor, minor actinides, which have a large neutron interaction cross-section, can be rationally processed, and in particular, by irradiation with fast neutrons, transuranic elements, whose nuclear fission is difficult to cause, can be directly caused to undergo nuclear fission.

However, long-lived radioactive nuclear fission products are difficult to process by neutron irradiation in a nuclear reactor and the like, and for example, for Sr-90, Cs-137 and the like, which have a small neutron interaction cross section, disposal processing using an accelerator is applied.

In a disposal process using an accelerator, because unlike a nuclear reactor they are operated subcritically, the safety in relation to criticality is superior, and there is the  advantage that there is a large degree of design freedom, and proton accelerators and electron beam accelerators are used.

In disposal processing using a proton accelerator, a nuclear spallation reaction is used in which high energy protons at, for example, 500 MeV to 2 GeV, are irradiated to spall the target nucleus, and nuclide transmutation is caused directly by using the nuclear spallation reaction. In addition, a nuclear fission reaction is generated by injecting the plurality of neutrons generated along with spallation of the target nucleus into a subcritical blanket placed around the target nuclei, and a nuclide transmutation reaction is generated by a neutron capture interaction. Thereby, for example, transuranic elements such as neptunium and americium and long-lived radioactive nuclear fission products can be disposed of, and furthermore, the heat generated by the subcritical blanket can be recovered and used for power generation, and the power necessary to operate to the proton accelerator can be made self-sufficient.

In addition, in disposal processing using an electron accelerator, disposal processing of long-lived radioactive nuclear fission products such as strontium and cesium and the transuranic elements and the like can be carried out by using gamma radiation generated by the bremsstrahlung of the proton beam or a large resonance reaction such as a photonuclear reaction, for example, the ($\gamma$, N) reaction and the ($\gamma$, nuclear fission) reaction, using gamma radiation and the like generated by a reverse Compton scattering by combining, for example, an electron accumulating ring and an optical cavity.

However, in the case of carrying out nuclide transmutation using a nuclear reactor or an accelerator, as in the disposal processes in the above-described examples of conventional  technology, there are the problems in that large-scale and high cost apparatuses must be used, and the cost required for the nuclide transmutation increases drastically.

Furthermore, in the case of processing, for example, Cs-137, which is a long-lived radioactive nuclide fission product, when transmuting Cs-137 radiated from an electron power generator of about one million KW to another nuclide using an accelerator, there are problems in that the necessary power reaches one million KW and a high strength and large current accelerator become necessary, and thus efficiency is low.

In addition, in contrast to a thermal neutron flux of about $1\times10^{14}$/cm$^2$/sec in a nuclear reactor such as a light water reactor, the neutron flux necessary for nuclide transmutation of Cs-137, which has a small neutron interaction cross section, is about $1\times10^{17}$ - $1\times10^{18}$/cm$^2$/sec, and there is the problem in that the necessary neutron flux cannot be attained.

SUMMARY OF THE INVENTION

In consideration of the above-described circumstances, it is an object of the present invention to provide a nuclide transmutation device and a nuclide transformation method that can carry out nuclide transmutation with a relatively small-scale device compared to the large-scale devices such as accelerators and nuclear reactors.

In order to attain the object related to solving the problems described above, the nuclide transmutation device according to a first aspect of the invention comprises a structure body (either a body that has not yet been covered with a material that is able to undergo nuclide transmutation, that is the structure body 11, the cathode 72, or the multilayer structure body 89, or a body that has been covered with a material that is able to undergo nuclide transmutation, that is the multilayer structure body 102 or the multilayer structure body 32 in the embodiments) that is made of palladium or a palladium alloy, or a hydrogen absorbing metal other than palladium, or a hydrogen absorbing alloy other than a palladium alloy, an absorbing part (the absorbing chamber 31, the absorbing chamber 103, or the electrolytic cell 83 in the embodiments) and a desorption part (the desorption chamber 34, the desorption part 101, or the vacuum container 85 in the embodiments) that are disposed so as to surround the structure body on the sides and form a closed space that can be sealed by the structure body, a high pressurization device (the deuterium tank 35, the deuterium tank 106, or the power source 81 in the embodiments) that makes the absorption part on the side of the surface of the structure body have a state wherein the pressure of the deuterium is relatively high, a low pressurization device (the turbo-molecular pumps 38 and 110, the rotary pumps 39 and 111, and a vacuum exhaust pump 91 in the embodiments) that makes the desorption part side on the other side of the surface of the structure body have a state wherein the pressure of the deuterium is relatively low, and a transmutation material binding device (the step S32, the step S22, the step S44, the step S14 or the step S04a, in the embodiments) that binds the material that undergoes nuclide transmutation on one surface of the structure body material ($^{133}$Cs, $^{12}$C, $^{88}$Sr and $^{23}$Na in the embodiments) that undergoes nuclide transmutation on the one of the surface of the structure body.

According to the nuclide transmutation device having the structure described above, a pressure differential in the deuterium between one surface and another surface of the structure body is provided in a state wherein the material that undergoes nuclide transmutation is bound to one of the surfaces of the structure body serving as a multilayer structure, and within the structure body a flux of deuterium from a surface side to the other surface side is produced, and thereby an easily reproducible nuclide transmutation reaction can be produced for the deuterium and the material that undergoes nuclide transmutation.

Furthermore, the nuclide transmutation device according to a second aspect of the present invention is characterized in comprising a high pressurization device that provides a deuterium supply means (the deuterium tanks 35 and 106 in the embodiments) that supplies deuterium gas to the absorption part, and the low pressurization device provides an exhaust means (the turbo-molecular pumps 38 and 110, and the rotary pumps 39 and 111 in the embodiments) that brings about a vacuum state in the desorption part.

According to the nuclide transmutation device having the structure described above, the absorption part is pressurized by the deuterium supply device, and at the same time, the pressure in the radiation part is reduced to a vacuum state by the exhaust means, and thus a pressure differential in the deuterium is formed in the structure body.

Furthermore, in an example not part of the invention, the nuclide transmutation device is characterized in the high pressurization device providing an electrolysis device (the power source 81 in the embodiments) that supplies an electrolytic solution (the electrolytic solution 84 in the embodiments) that includes deuterium to the absorption part and electrolyzes the electrolytic solution with the structure body serving as the cathode, and the lower pressurization device provides an exhaust device (the vacuum exhaust pump 91 in the embodiments) that brings about a vacuum state in the radiation part.

According to the nuclide transmutation device having the structure described above, by electrolyzing the electrolytic solution on a surface of the structure body with the structure body serving as a cathode, deuterium is absorbed effectively into the structure body due to the high pressure, and by reducing the pressure of the radiation part to a vacuum state using the exhaust device, a pressure differential in the deuterium is formed in the structure body.

Furthermore, in another example not part of the invention, the nuclide transmutation device comprises a transmutation material lamination device (step S04, step S44, step S14, or step S04a, in the embodiments) that laminates the material that undergoes nuclide transmutation onto one surface of the structure body.

According to the nuclide transmutation device having the structure described above, the transmutation material lamination means can laminate the material that undergoes the nuclear transmutation on a surface of the structure body by a surface forming process, such as electrodeposition, vapor deposition, or sputtering.

Furthermore, in another example not part of the invention, the nuclide transmutation device provides a transmutation material supply means (step S22 or step S32 in the embodiments) that supplies a material that undergoes nuclide transmutation in the absorption part, and exposing one surface of the structure body to a gas or liquid that includes the material that undergoes the nuclide transmutation.

According to the nuclide transmutation device having the structure described above, the material that undergoes nuclide transmutation can be bound to one surface of the structure body by mixing the material that undergoes nuclide transmutation in, for example, a gas or liquid that includes deuterium.

Furthermore, in another example not part of the invention, the nuclide transmutation device is characterized in that the structure body provides from one surface to the other surface in order a base material (the Pd substrate 23 in the embodiments) that is made of palladium or a palladium alloy, or a hydrogen absorbing metal other than palladium, or a hydrogen absorbing alloy other than a palladium alloy; a mixed layer (the mixed layer 22 in the embodiments) that is formed on the surface of the base material and comprises palladium or a palladium alloy, or a hydrogen absorbing metal other than palladium or a hydrogen absorbing alloy other than a palladium alloy, and a material having a low work function (CaO in the embodiments); and a surface layer (the Pd layer 21 in the embodiments) that is formed on the surface of the mixed layer and comprises palladium or a palladium alloy, or a hydrogen absorbing metal other than palladium or a hydrogen absorbing alloy other than a palladium alloy.

According to the nuclide transmutation device having the structure described above, a mixed layer that includes a material having a low work function is provided on the structure body that serves as the multilayer structure, and thereby the repeatability of the production of the nuclide transmutation reaction is improved.

According to the nuclide transmutation device having the structure described above, the production of the nuclide transmutation reaction can be further promoted by transmuting the material that undergoes nuclide transmutation to a nuclide having a similar isotope ratio composition.

In addition, in another example not part of the invention a nuclide transmutation method, (either a body that has not yet been covered with a material that is able to undergo nuclide transmutation, that is the structure body 11, the cathode 72, or the multilayer structure body 89, or a body that has been covered with a material that is able to undergo nuclide transmutation, that is the multilayer structure body 102 or the multilayer structure body 32 in the embodiments) comprises palladium or a palladium alloy, or a hydrogen absorbing metal other than palladium, or a hydrogen absorbing alloy other than a palladium alloy, a high pressurizing process (step S07, step S22, step 32 or step S46 in the embodiments) that brings about a state in which the pressure of the deuterium is relatively high on one surface side of the structure body, a low pressurizing process (step S05, step S23, step S33 or step S45 in the embodiments) that brings about a state in which the pressure of the deuterium is relatively low on the other surface side of the structure body, and a transmutation material binding process (step S04, step S14, step S32, step S22, steps S44 or S04a in the embodiments) that binds the material that undergoes nuclide transmutation to the one surface of the structure body.

According to the nuclide transmutation method described above, a pressure differential in the deuterium is provided between one surface side and the other surface side of the structure body in a state in which the material that undergoes nuclide transmutation is bound to the one surface of the structure body that serves as the multilayer structure, and a flux of deuterium from the one surface side to the other surface side in the structure body is produced, and thereby the nuclide transmutation reaction is produced with good repeatability for the deuterium and the material that undergoes nuclide transmutation.

Furthermore, in another example not part of the invention in a nuclide transmutation method, the transmutation material binding process includes either a transmutation material lamination process (step S04, step S44, step S14 or step S04a and steps S5, S6, S7, S8, S9, S10 in the embodiments) that laminates the material that undergoes nuclide transmutation on the one surface of the structure body, or a transmutation material supply process (step S21 and steps S22, S23, S24, S25, S26, S27 or steps S32, S33, S34, S35, S36 in the embodiments) that exposes the one surface of the structure body to a gas or liquid that includes the material that undergoes nuclide transmutation.

According to the nuclide transmutation method described above, a material that undergoes nuclide transmutation is laminated on the one surface of the structure body by a film formation process using a transmutation material lamination process such as electrodeposition, vaporization deposition, or sputtering, or the material that undergoes nuclide transmutation is mixed with a gas or liquid that includes deuterium and the like, and thereby the material that undergoes the nuclide transmutation are disposed on the one surface of the structure body.

Furthermore, in another example not part of the invention in a nuclide transmutation method, the transmutation material binding process (steps S42, S43, S44, S45, S46, S47, S48) binds the material that undergoes nuclide transmutation to the one surface of the structure body.

According to the nuclide transmutation method described above, the material that undergoes nuclide transmutation is transmuted to a nuclide having a similar isotopic ratio composition, and thereby the nuclide transmutation reaction can be promoted.

BRIEF DESCRIPTION OF THE DRAWINGS

Fig. 1 is a cross-sectional view for explaining the principle of the nuclide transmutation method according to the first embodiment of the present invention.

Fig. 2 is a cross-sectional structural drawing showing the structure body used in the nuclide transmutation method according to the first embodiment of the present invention.

Fig. 3 is a structural scheme of the nuclide transmutation device according to the first embodiment of the present invention.

Fig. 4 is s cross-sectional structural drawing of the multilayer structure body used in the nuclide transmutation device shown in Fig. 3.

Fig. 5A is a cross-sectional structural drawing of the mixed layers and Fig. 5B is a cross-sectional structural drawing of the structure body including the mixed layer.

Fig. 6 is a structural scheme of the device that adds a material to be subjected to the nuclide transmutation to the multilayer structure body .

Fig. 7 is a graph showing the spectra of Pr by XPS (X-ray Photoelectron Spectrometry) on the surface of the multilayer structure body shown in Fig. 4.

Fig. 8 is a graph showing the change in the number of Cs and Pr atoms over time on the surface of the multilayer structure body shown in Fig. 5.

Fig. 9 is a graph showing the change in the number of C, Mg, Si, and S atoms over time on the surface of the multilayer structure body in the third embodiment.

Fig. 10 is a graph showing the change in the number of C, Mg, Si, and S atoms over time on the surface of the multilayer structure body in the fourth embodiment.

Fig. 11 is a cross-sectional view showing a multilayer structure body according to the second modified embodiment of the present invention.

Fig. 12 is a graph showing an XPS spectrum of Mo on the surface of the multilayer structure body shown in Fig. 11.

Fig. 13 is a graph showing the change in the number of Sr and Mo atoms over time on the surface of the multiplayer structure body shown in Fig. 11.

Fig. 14 is a graph showing the change in the number of Sr and Mo atoms over time on the multiplayer structure body shown in Fig. 11.

Fig. 15 is a graph showing the change of the isotopic ratio of the natural Mo with the change of the atomic mass number over time.

Fig. 16 is a graph showing the change of the isotopic ratio of the nucleated Mo on the surface of the multilayer structure body according to the fifth embodiment of the present invention together with the change in its atomic mass number.

Fig. 17 is a graph showing the change of the isotopic ratio of the natural Sr, which is added as a material that undergoes nuclide transmutation, together with the change in its mass number.

Fig. 18 is a scheme explaining the principle of the nuclide transmutation according to the second embodiment of the present invention.

Fig. 19 shows a scheme of the nuclide transmutation device according to the second embodiment of the present invention.

Fig. 20 is a drawing showing the surface on the electrolyte cell side of the multilayer structure body after experiments using the nuclide transmutation device shown in Fig. 19.

Fig. 21 is a graph showing the results of SIMS (secondary ion mass spectrometer) analysis of the surface of the multilayer structure body after experiments using the nuclide transmutation device shown in Fig. 19.

Fig. 22 shows a scheme of a nuclide transmutation device according the third embodiment of the present invention.

DETAILED DESCRIPTION OF THE INVENTION

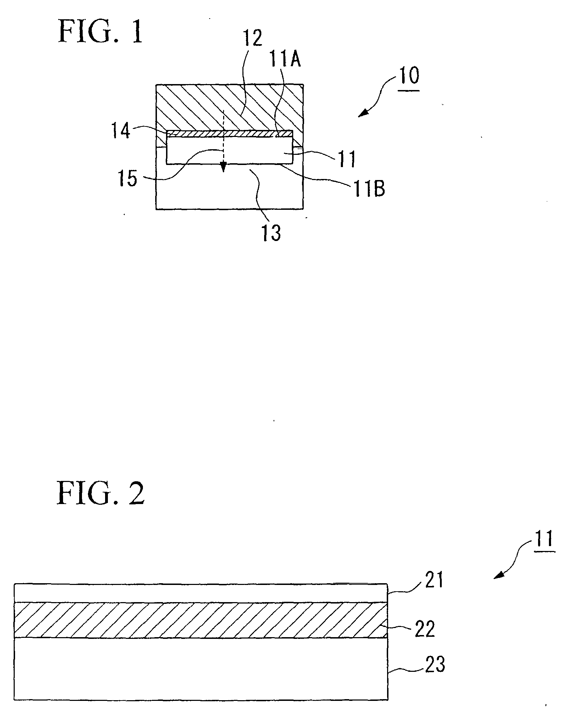

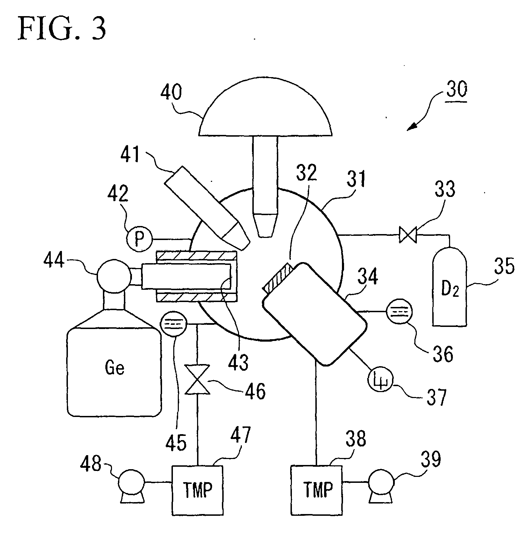

In the following text, the structure body 11, the cathode 72 and the multilayer structure body 89 are relative to a basis structure body that will be covered by a material that will undergo nuclide transmutation in reference to respectively figures 1, 2, 5B, 6 ; 18 ; 19. In the same way, the multilayer structure bodies 32 and 102 are relative to a structural body, for example 11, 72 or 89, that has been covered by a material that is able to undergo nuclide transmutation in reference to respectively figures 3, 4, 11 ; 22. The final structure body 96 is one of these multilayer structure bodies 32 and 102 which has at least partly being transmuted.

Below, the nuclide transmutation device and nuclide transformation method according to the first embodiment of the present invention are explained referring to the figures 1 to 6.

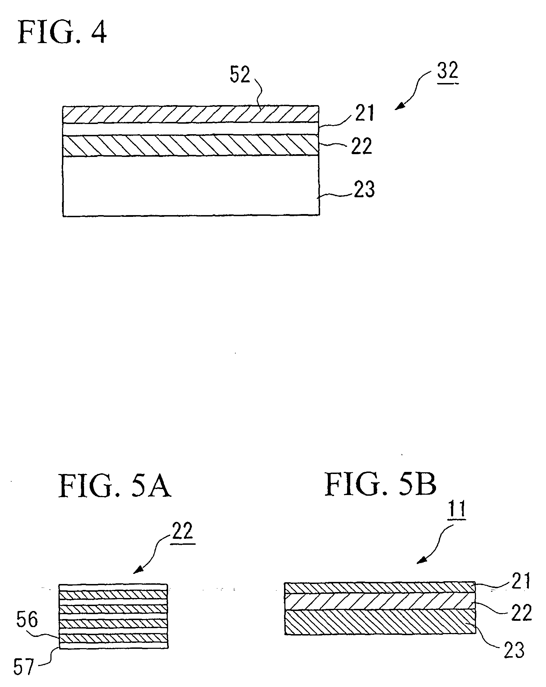

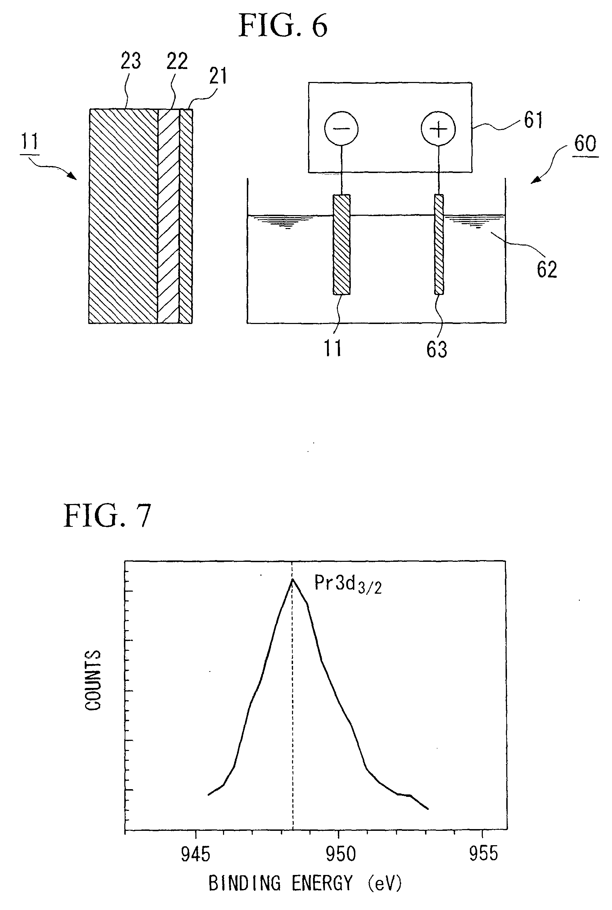

Fig. 1 is a drawing for explaining the principle of the nuclide transmutation method according to the first embodiment of the present invention; Fig. 2 is a cross-sectional structural drawing showing a structure body 11 used in the nuclide transmutation method according to the first embodiment of the present invention; Fig. 3 is a structural scheme of a nuclide transmutation device 30 according to the first embodiment of the present invention; Fig. 4 is s cross-sectional structural drawing of a structure body 51 used in the nuclide transmutation device shown in Fig. 3; Fig. 5A is a cross-sectional structural drawing of a mixed layer 22 and Fig. 5B is a cross-sectional drawing of the structure body 11 containing a mixed layer 22; Fig. 6 is a scheme of the device that adds a material, that undergoes nuclide transmutation, to the structure body 11.

As shown, for example, in Fig. 1, the device 10 that realizes the nuclide transmutation method according to the present embodiment comprises a structure body 11 having a substantially plate shape comprising palladium (Pd) or an alloy of Pd or another metal (for example, Ti) that absorbs hydrogen, or an alloy thereof, and a material that undergoes nuclide transmutation attached to one surface 11A among the two the surfaces of this structure body 11; and in the device a flow 15 of deuterium is generated in the structure body 11 due to the one surface side 11A of the structure body 11 serving as a region 12 in which, for example, a load or the pressure of hydrogen due to electrolysis is high and the other surface 11B side serving as a region 13 in which the pressure of the deuterium due to vacuum exhaust and the like is low; and the nuclide transmutation is carried out by the reaction between the deuterium and a material 14 that undergoes nuclide transmutation.

Here, as shown for example in Fig. 2, the structure body 11 is preferably formed by a mixed layer 22 of a material that has a relatively low work function, that is, a material that emits electrons easily (for example, a material having a work function equal to or less than 3eV), and Pd being formed on the surface of a Pd substrate 23, and a Pd layer 21 being laminated on surface of the mixed layer 22.

As shown in Fig. 3, the nuclide transmutation device 30 according to the present embodiment comprises an absorption chamber 31 having an interior that can be maintained in an airtight state, a radiation chamber 34 provided inside this absorption chamber 31 that can be maintained airtight due to a multilayer structure body 32, a deuterium tank 35 that supplies deuterium into the absorption chamber 31 via a variable leak valve 33, a radiation chamber vacuum gauge 36 that detects the degree of the vacuum in the radiation chamber 34, a substance analyzer 37 that detects the gaseous reaction products produced, for example, from the multilayer structure body 32, and evaluates the amount of penetration of the deuterium that penetrates the multilayer structure body 32 by measuring the amount of deuterium in the radiation chamber 34, a turbo-molecular pump 38 that always maintains the interior of the radiation chamber 34 in a vacuum state, and a rotary pump 39 for preliminary evacuating the radiation chamber 34 and the turbo-molecular pump 38.

Further, the nuclide transmutation device 30 comprises static electricity analyzer 40 that detects photoelectrons, ions, and the like emitted from the atoms of the surface of the multilayer structure body 32 that are excited due to irradiation by X-rays, an electron beam, and a particle beam and the like, an X-ray gun 41 for XPS (X-ray Photo-electron Spectrometry) that radiates X-rays on one surface exposed to deuterium among the two surfaces of the multilayer structure body 32 in the absorption chamber 31 that is exposed to deuterium, a pressure meter 42 that detects pressure in the absorption chamber 31 into which deuterium has been introduced, an X-ray detector comprising, for example, a high purity germanium detector 44 having a beryllium window 43, an absorption chamber vacuum meter 45 that detects the degree of the vacuum in the absorption chamber 31, a vacuum valve 46 that maintains the interior of the absorption chamber 31 is a vacuum state before the introduction of the deuterium, for example, a turbo-molecular pump 47 that evacuates the absorption chamber 31 to a vacuum state, and a rotary pump 48 for preliminary evacuating the absorption chamber 31 and the turbo-molecular pump 47.

In addition, by placing the absorption chamber 31 side of the multilayer structure body 32 in a condition in which the pressure of the deuterium is relatively high by placing the radiation chamber 34 side of the multilayer body 32 in a condition in which the pressure of the deuterium is relatively low, and by forming the pressure difference in the deuterium on both surfaces of the multilayer structure body 32, a flow of deuterium is produced from the absorption chamber 31 side to the radiation chamber 34 side.

Here, as shown in Fig. 4, for example, the multilayer structure body 32 comprises the structure body 11 having an additional layer for example made of cesium. Thus, the multiplayer structure body 32 is formed such that a mixed layer 22 of a material that has a relatively low work function (for example, a material having a work function equal to or less than 3eV) and Pd is formed on the surface of the Pd substrate 23, the Pd layer 21 is laminated on the surface of this mixed layer 22, and a cesium (Cs) layer 52 is added to the surface of the Pd layer 21 as the material that undergoes nuclide transmutation.

The nuclide transmutation device 30 according to the present embodiment is provided, and next, the method for carrying out the nuclide transmutation using this nuclide transmutation device 30 will be explained referring to the figures.

First, the Pd substrate 23 (for example, having a length of 25 mm, a width of 25 mm, a depth of 0.1 mm, and a purity of 99.5% or greater) shown in Fig. 2, for example, is degreased by ultrasound cleaning over a predetermined time interval in acetone. In addition, in a vacuum (for example, equal to or less than $1.33 \times 10^{-5}$ Pa), annealing, that is, heat processing, is carried out over a predetermined time interval at 900° C (step S01).

Next, at room temperature, contaminants are removed from the surface of the Pd substrate 23 after annealing by carrying out etching processing over a predetermined time interval (for example, 100 seconds) using heavy aqua regia (step S02).

Next, using a sputtering method employing an argon ion beam, the structure body 11 is produced by carrying out surface formation on the Pd substrate 23 after the etching processing. Here, for example, the thickness of the Pd layer 21 shown in Fig. 2 is $400 \times 10^{-10}$ m, and the mixed layer 22 of the material having a low work function and the Pd, as shown in Fig. 5A, is formed by alternately laminating, for example, a CaO layer 57 having a thickness of $100 \times 10^{-10}$ m and, for example, a Pd layer 56 having a thickness of $100 \times 10^{-10}$m, and thus the thickness of the mixed layer 22 is $1000 \times 10^{-10}$m. In addition, by forming as a film a Pd layer 21 on the surface of the mixed layer 22 of $400 \times 10^{-10}$m, the structure body 11 is formed (step S03).

Next, by electrolysis of $CsNO_3$ of a dilute solution of $D_2O$ (a solution of $CsNO_3/D_2O$), as an example that undergoes nuclide transmutation, for example, the material Cs is added to the film processed surface of the structure body 11. For example, like the electrodeposition device 60 shown in Fig. 6 using 1 mM of a $CsNO_3 / D_2O$ solution as an electrolyte 62, connecting a platinum electrode 63 to the anode of the power source 61, connecting the structure body 11 to the cathode of the power source 61, and carrying out electrolysis over a 10 second interval at a voltage of 1V, the reaction represented by the following chemical Formula (1) is produced, the Cs layer 52 is added, and the multilayer structure body 32 is formed (step S04).

$$Cs^+ + e^- \rightarrow Cs \qquad\qquad (1)$$

In addition, the Cs layer 52 of the multilayer body 32 is faced towards the absorption chamber 31 side, the absorption chamber 31 and the desorption chamber 34 are closed into an airtight state by interposing the multilayer structure body 32. The desorption chamber 34 is evacuated first using a rotary pump 39 and a turbo molecular pump 38. Furthermore, the absorption chamber 31 is evacuated using the rotary pump 48 and the turbo molecular pump 47 by closing the variable leak valve 33 and by opening the vacuum valve 46 (step S05).

Next, after sufficiently stabilizing the degree of the vacuum of the absorption chamber 31 (for example, to be equal to or less than $1 \times 10^{-15}$ Pa), the elements present on the surface of the multilayer structure body 32 on the absorption chamber 31 side are analyzed by XPS (step S06). That is, the surface of the multilayer structure body 32 is irradiated by an X-ray beam from the X-ray gun 41, and energy of the photoelectrons emitted from atoms on the surface of the multilayer structure body 32 excited by the X-ray irradiation is analyzed by the electrostatic analyzer 40 so that the elements present on the absorption chamber 31 side surface of the multiplayer structure body 32 are identified.

Next, after heating the multilayer structure body 32 by a heating device (not shown), for example, at 70° C, the vacuum exhausting from the absorption chamber 31 is suspended by closing the vacuum valve 46, a deuterium gas is introduced at a predetermined gas pressure into the absorption chamber 31 by opening the variable leak valve 33, and the experiment of nuclide transmutation is commenced. Here, the gas pressure when deuterium is introduced into the absorption chamber 31 is, for example, $1.01325 \times 10^5$ Pa (or 1 atmosphere).

In addition, measurement of the gaseous reaction product (for example, the mass number A = 1 to 140) is carried out using the mass spectrograph 37 in the radiation chamber 34, and the diffusion behavior of the deuterium that penetrates through the multilayer structure body 32 and is radiated into the radiation chamber 34 is evaluated. In addition, measurement of the X-ray is carried out by a high purity germanium detector 44 disposed on the absorption chamber 31 side of the multilayer structure body 32 (step S07).

Note that the amount of deuterium released into the desorption chamber 34 after permeating through the multilayer structure body 32 is calculated based on the degree of vacuum in the desorption chamber 34 detected by the desorption chamber vacuum gauge 36 and a volume flow rate of the turbo molecular pump 38.

After the commencement of the introduction of the deuterium gas into the absorption chamber 31, for example, after several tens of hours, the temperature of the multilayer structure body 32 is restored to room temperature. The introduction of the deuterium gas is suspended by closing the variable leak valve 33, and furthermore, the absorption chamber 31 is evacuated by opening the vacuum valve 46 and the experiment of nuclide transmutation is ended.

In addition, after sufficiently stabilizing the degree of vacuum in the absorption chamber 31 (for example, equal to or less than $1 \times 10^{-5}$ Ps), the elements present on the surface of the multilayer structure body 32 on the absorption chamber 31 side is analyzed by XPS, and thereby the measurement of products is carried out (step S08).

In addition, the processing in the above-described steps S06 to S07 is repeated, and the change over time of the nuclide transmutation reaction is measured (step S09).

Additionally, the multilayer structure body 32 is extracted from the nuclide transmutation device 30, and the experiment of the nuclide transmutation is ended (step S10).

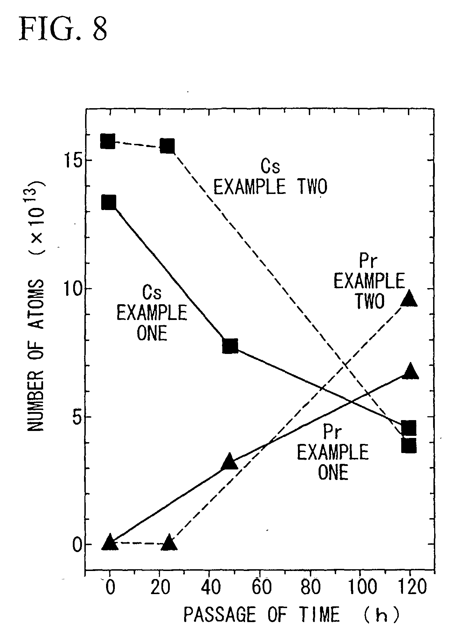

Below, the results of two experiments of nuclide transmutation carried out using the nuclide transmutation method according to the present embodiment, that is, the example one and the example two when the identical experiment is carried out two times, will be explained referring to Fig. 7 and Fig. 8.

Fig. 7 is a graph showing the spectrum of Pr using XPS in the surface of the multilayer structure body 32 shown in Fig. 4, and Fig. 8 is a graph showing the change over time in the number of atoms of Cs and Pr in the surface of the multilayer structure body 32 shown in Fig. 4.

According to the results of the XPS analysis of the example one and example two, the Cs (atomic number Z = 55) of the multilayer structure body 32 decreases with the passage of time, and for example, like the spectrum of Pr using XPS shown in Fig. 7, the Pr (praseodymium, atomic number Z = 59) increased.

Below, the method of calculating the number of atoms of each element from the spectrum of Cs and Pr using XPS will be explained.

Moreover, the strength of X-rays radiated from the X-ray gun 41 to the multilayer structure body 32 during the measurement by XPS is made constant, and the region in which these X-rays are desorbed is assumed to be identical in each of the measurements of the example one and the example two.

Furthermore, the region in which the X-rays are emitted on the surface of the multilayer structure body 32 is, for example, a circular region having a diameter of 5 mm, and from the estimation of the escape depth of the photoelectrons that are emitted, the depth that can be analyzed in XPS is, for example, $20 \times 10^{-10}$m.

In addition, the Pd that forms the Pd substrate 23 is an fcc (face-centered cubic) lattice, and thus the number of Pd atoms, calculated from the peak strength of the spectrum of PD obtained by XPS, is $3.0 \times 10^{15}$.

In addition, the number of atoms of each element is calculated by comparing the peak strength of the spectrum of each element obtained by XPS and the peak strength of the spectrum of Pd, referring to the ratio of the ionization cross section of each element, that is, the electrons in the inner shell of the elements, that are excited due to absorbing X-rays and the like. Moreover, in the following Table 1, the calculated value of the ionization cross section of each element is shown as a relative value in the case that the value of the 1s orbital of C ($2.22 \times 10^{-24}$ $m^2$) is set to '1'. Further, in the following chart 1, 2p of Si, 2p of S, and 2p of C1 are calculated as the sum of $2p_{3/2}$ and $2p_{1/2}$.

Table 1

| bonding energy of inner shell electrons | ionization cross section | bonding energy of inner shell electrons | ionization cross section |
|---|---|---|---|
| C is (283.5 eV) | 1.00 | Mg 2s (88.6 eV) | 2.27 |
| O is (543.1 eV) | 2.29 | Pd $3d_{5/2}$ (335.1 eV) | 10.1 |
| Si 2p (99 eV) (*) | 0.894 | Pd $3d_{3/2}$ (340.4 eV) | 7.03 |
| Si 2s (149.8 eV) | 0.884 | Cs $3d_{5/2}$ (726.6 eV) | 22.93 |
| S 2p (163 eV) (*) | 1.85 | Ce $3d_{5/2}$ (883.9 eV) | 28.57 |
| Cl 2p (201 eV) (*) | 2.47 | Pr $3d_{5/2}$ (928.8 eV) | 30.72 |

As shown in Fig. 8, in the first example, under initial conditions, $1.3 \times 10^{14}$ atoms of Cs were reduced to $8 \times 10^{13}$, and after 120 hours, were reduced to $5 \times 10^{13}$.

In contrast, although Pr was not present before the commencement of the experiment, after 48 hours, $3 \times 10^{13}$ atoms thereof were detected, and after 12 hours, the number was observed to increase to $7 \times 10^{13}$ atoms.

Similarly, in the second example as well, with the passage of time from the commencement of the experiment, a decrease in the number of Cs atoms and Pr production and an increase in the number of Pr atoms was observed, showing a tendency substantially identical to that of the first example. Thus, this can be interpreted as showing that the nuclide transmutation of Cs to Pr was occurring.

Moreover, in the following, we will consider whether or not the detected Pr is due to contaminants.

In the example one and the example two of the present embodiment as described above, analysis of elements was carried out without extracting the multilayer structure body 32 from the vacuum container comprising the absorption chamber 31 and the radiation chamber 34, and thus the causes of the introduction of contaminants that can be considered, are contaminants included on the deuterium gas ($D_2$ gas) and contaminants in the multilayer structure body 32.

In the case of analyzing $D_2$ gas in the nuclide transmutation device 30 when the $D_2$ gas is 99.6% pure, and the contaminant $N_2$ and $D_2O$ are equal to or less than 10 ppm, contaminants $O_2$, $CO_2$, and CO are equal to or less than 5 ppm, gases of contaminants other than these contaminants and hydrocarbons were not detected.

In contrast, in the multilayer structure body 32, the purity of the Pd was 99.5%, and the purities of CaO and $CsNO_3$ were 99.9%. In addition, as a result of carrying out quantitative analysis of lanthanides ($_{57}$La to $_{71}$Lu) in the multilayer structure body 32 before the commencement of the experiment using glow desorption mass spectrometry (GD-MS), Nd was detected at 0.02 ppm, and the other lanthanides besides Nd were below detection limits, that is, equal to or less than 0.01 ppm.

Here, if we assume that 0.01 ppm of Pr, which is the detection limit, is present in the multilayer structure body 32 used in the example one and the example two (for example, $0.7 g \cong 7 \times 10^{-3}$ mol), then the number of Pr atoms present in the multilayer structure body 32 would be $4.2 \times 10^{13}$.

In this case, based on the above assumption, if we assume that the Pr atoms detected in example one and example two are Pr atoms below the detection limits, then it is also necessary to assume that all the Pr atoms below the detection limit are disposed so as to be concentrated in the region having a depth of several $10 \times 10^{-10}$ m from the surface of the multilayer structure body 32, and a physical phenomenon in which the Pr atoms scattered as contaminants in the multilayer structure body 32 are concentrated only in proximity to the surface of the multilayer structure body 32 is thermodynamically impossible. Thus, we cannot conclude that the Pr atoms detected in example one and example two are contaminants included beforehand in the multilayer structure body 32. Furthermore, if they are impurities included beforehand in the multilayer structure body 32, we can determine that there is no time dependent change of the atomic number, that is, a change over time in the number of atoms will maintain a constant value.

Based on the above, we can conclude that the Pr detected in example one and example two is produced as a result of the nuclide transmutation reaction.

Moreover, the experimental results of the above-described example one and example two are extremely well explained by the EINR (Electron-Induced Nuclear Reaction) model that appeared in the journal Fusion Technology, published by the US Atomic Energy Conference (Y. Iwamura, T. Itoh, N. Gotoh, and I. Toyoda, "Detection of Anomalous Elements, X-ray, and Excess Heat in a D2-Pd System and its Interpretation by the Electron-Induced Nuclear Reaction (EINR) Model", Fusion Technology, vol. 33, no. 4, p. 476, 1998).

According to this EINR model, we can consider the Pr to be produced from Cs according to the Formula (2) and Formula (3).

Moreover, in the following Formula (2) and Formula (3), d denotes deuterium, e denotes electrons, $^2$n denotes dineutrons, and $\nu$ denotes neutrinos.

$$^{2}_{1}d + ^{0}_{-1}e \rightarrow ^{2}_{0}n + \nu \qquad (2)$$

$$^{133}_{55}Cs + 4^{2}_{0}n \rightarrow ^{141}_{59}Pr \qquad (3)$$

As shown in Formula (2), according to the EINR model, deuterium captures electrons to generate dineutrons, and simultaneously, nuclide transmutation occurs due to reacting with substances such as Cs. Moreover, in Formula (3), the symbols for $\beta$ decay, that is, the $\beta^-$ decay from $^{141}$Cs (= $^{133}$Cs + 4 $^2$n) to $^{141}$Pr, have been omitted.

As described above, according to the nuclide transmutation device 10 of the present embodiment, a relatively large-scale device such as a nuclear reactor or an accelerator are not necessary, and the process of nuclide transmutation can be implemented with a relatively small-scale construction.

In addition, according to the nuclide transmutation method of the present embodiment, the possibility that the number of atoms of Pr, which are not detected before the commencement of the experiment and are detected to be increasing after the commencement of the nuclide transmutation experiments, are detected due to contaminants included beforehand in the supplied $D_2$ gas or in the multilayer structure body 32 is eliminated, and the production of a nuclide transmutation reaction from Cs to Pr can be repeated well and reliably.

Moreover, in the embodiment described above, the multilayer structure body 32 was formed by adding a cesium (Cs) layer 52 on the surface of the Pd layer 21 as a material that undergoes the nuclide transmutation, but the invention is not limited thereby, and in place of using Cs as a material that undergoes the nuclide transmutation, other materials such as carbon (C) can be added.

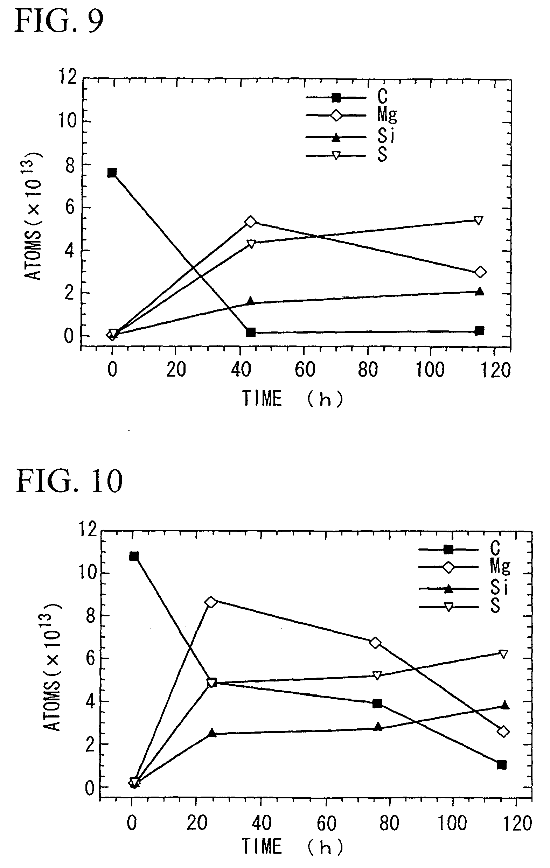

Below, as a first modified example of the present embodiment, the case of adding carbon (C), for example, as a material that undergoes the nuclide transmutation on the surface of the Pd surface 21, will be explained referring to Fig. 9 and Fig. 10.

Fig. 9 is a graph showing the change in the number of atoms for each of C, Mg, Si, and S over time on the surface of the multilayer structure body 32 in the third example, and Fig. 10 is a graph showing the change in the number of atoms for each of C, Mg, Si, and S over time on the surface of the multilayer structure body 32 in the fourth example.

In this first modified example, the point that differs greatly from the first embodiment described above is the method of forming the multilayer structure body 32, and in particular, the process in step S04 described above.

Specifically, after the step S03 described above, the multilayer structure body 32 is formed by carbon (C) in the atmosphere adhering to the surface of the Pd layer 21 due to exposing the structure body 11 comprising the Pd substrate 23, mixed layer 22, and the Pd layer 21 to the atmosphere (step S14).

In addition, the Pd layer 21 having the adhering C is faced towards the absorption chamber 31, the absorption chamber 31 and the radiation chamber 34 are closed by interposing the multilayer structure body 32 therebetween, and a vacuum desorption is respectively carried out on both absorption chamber 31 and radiation chamber 34.

Then the processing in the following the above-described step S06 is carried out.

Below, the results of two experiments, that is, example three and example four when the same experiment according to the first modified example is carried out two times, on nuclide transmutation experiment carried out by the nuclide transmutation method of the modified example of the present embodiment is explained referring to the figures 9 and 10.

In this case, by the results of the analysis of XPS in example three and example four, the C in the multilayer structure body 32 decreases with the passage of time, and Si and S, which are reaction products, and Mg, which is an intermediate product, were detected.

In addition, similar to the embodiment described above, the number of atoms of each element is calculated from the spectrum of C, Mg, Si, and S by XPS.

As shown in Fig. 9, in example three, the number of C atoms originating in hydrocarbons decreased 44 hours after the commencement of the experiment, while Mg, which was not present before the commencement of the experiment, was detected 44 hours later, and furthermore, had somewhat decreased after 116 hours.

Furthermore, Si and S, which were not present before commencement of the experiment, increased monotonically 44 hours later and 116 hours later.

As shown in Fig. 10, in example four, the number of C atoms originating in hydrocarbons decreased monotonically 24 hours, 76 hours, and 116 hours after the commencement of the experiment, while in contrast Mg, which was not present before the commencement of the experiment, was produced 24 hours after commencement, and furthermore, monotonically decreased after 76 and 116 hours.

According to the above results, the nuclide transmutation method according to the modified example of the present invention resulted in C being transmuted, and Mg, Si, and S being generated.

In this case, according to the EINR model described above, the nuclide transmutation of C is represented in Formula (2) described above and Formula (4). Moreover, in Formula (4), a reaction by a dineutron cluster $(6_0^2 n, 2_0^2 n)$ is represented.

$$_6^{12}C \xrightarrow{\quad 6_0^2 n \quad} {}_{12}^{24}Mg \xrightarrow{\quad 2_0^2 n \quad} {}_{14}^{28}Si \xrightarrow{\quad 2_0^2 n \quad} {}_{16}^{32}S \qquad (4)$$

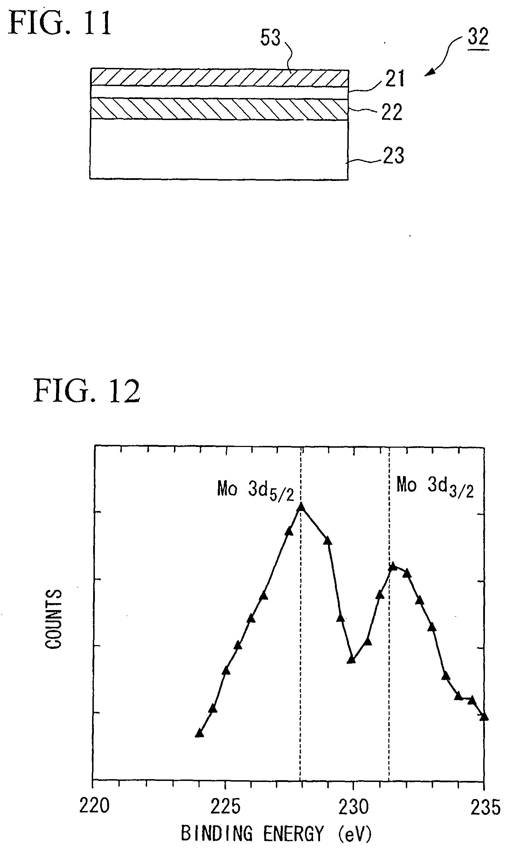

Below, the second modified example of the present embodiment is explained with reference to Figs. 11 to 17 when, for example, strontium (Sr) is added on the surface of the Pd layer 21 as an element that undergoes nuclide transmutation.

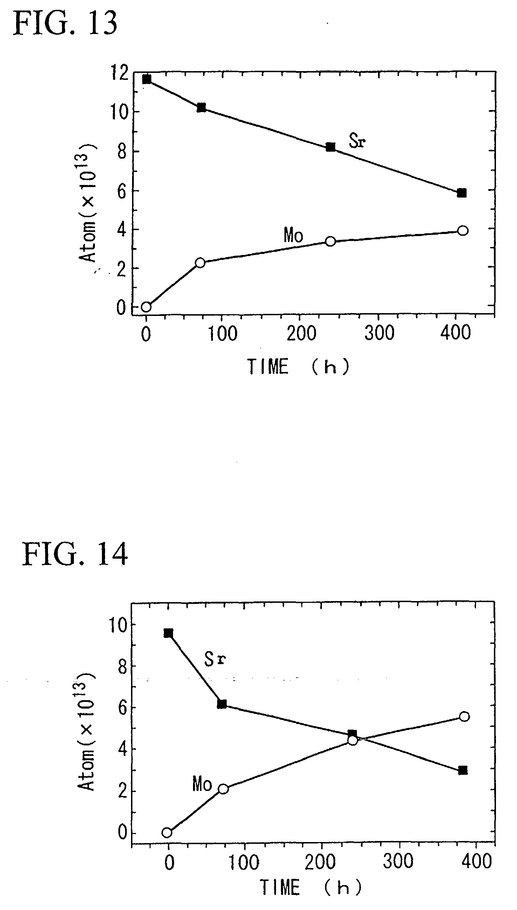

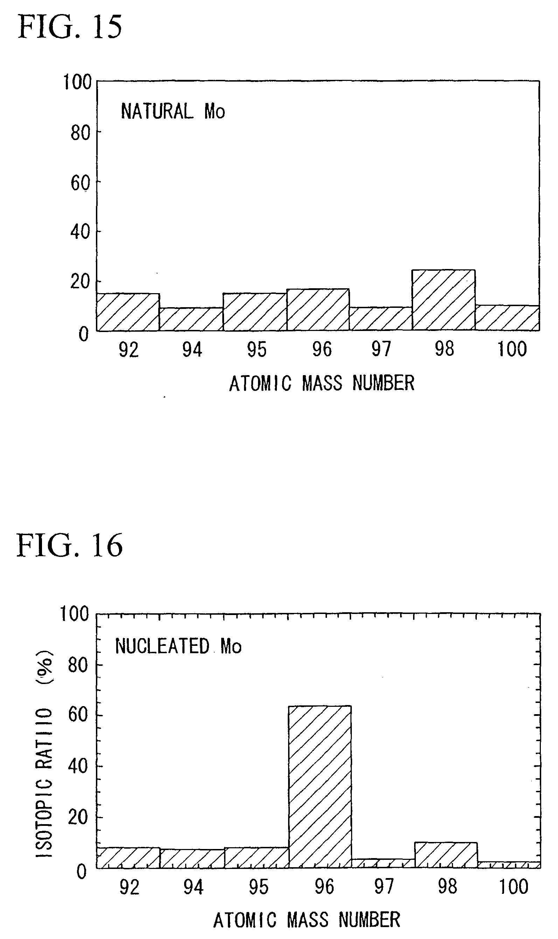

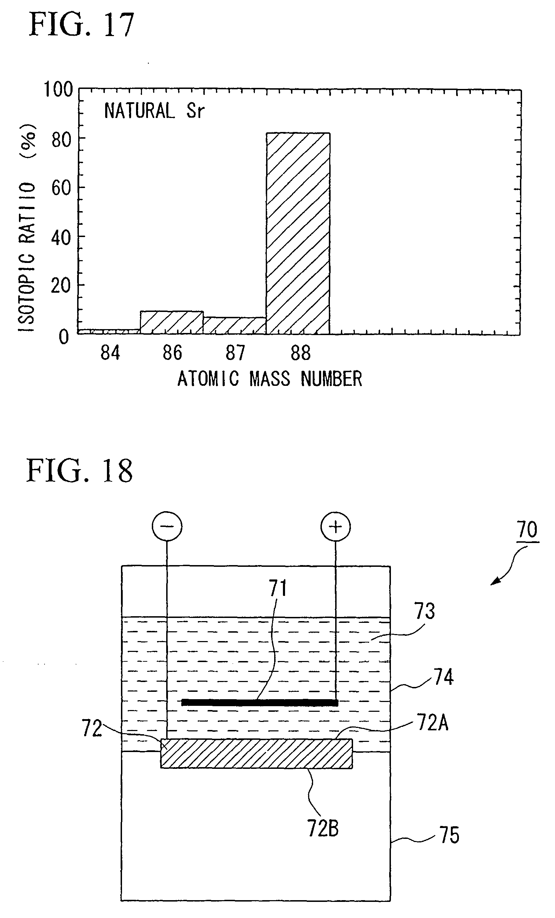

Fig. 11 is a cross-sectional structure view showing the multilayer structure body 32 related to the second modified example of the present embodiment. Fig. 12 is a graph showing the XPS spectrum of the Mo element on the surface of the multilayer structure body 32 shown in Fig. 11. Figs. 13 and 14 show a time dependent change of atomic numbers of respective Sr and Mo elements on the surface of the multilayer structure body 32. Fig. 15 shows the change of an isotopic ratio and the atomic mass number of natural Mo. Fig. 16 shows the change of an isotopic ratio and the atomic number of Mo observed on the multilayer structure body 32 in the fifth embodiment. Fig. 17 is a graph showing the change of the isotopic ratio and the atomic mass number of the natural Sr added as a material that undergoes nuclide transmutation.

In this second modified example, the Sr layer 53 is added on the multilayer structure body 32 in place of the Cs layer 52 used for being subjected to the nuclide transmutation. That is, the point of the second modified example which differs from the above-described first modified example is the method of forming the multilayer structure body 32, particularly, the processing in step S04. Note that, in the second modified example, the platinum substrate 23 has a size of 25 mm × 25 mm × 0.1 mm (length × width × thickness) and has an impurity of more than 99.9%.

In the second modified example, after the above-described step S03, Sr, for example, is added as the material that undergoes nuclide transmutation on the film formed surface of the structure body by electrolysis of a diluted solution

of SrO in $D_2O$ ($Sr(OD)_2/D_2O$ solution) on the film forming surface of the multiplayer structure body 11. In the electrodeposition device 60, for example, shown in Fig. 6, 1 mM of the $Sr(OD)_2/D_2O$ solution is used, and electrolysis is carried out, for example, for 10 seconds at IV after connecting the anode of the power source 61 to the platinum anode 63 and connecting the cathode of the power source 61 to the multilayer structure body 11. The chemical reaction shown by the formula (5) takes place by the electrolysis, and the Sr layer 53 is deposited on the surface of the multilayer structure body 32 (step S04a)

$$Sr^{2+} + 2e^- \rightarrow Sr \qquad\qquad (5)$$

Subsequently, the Sr layer 53 of the multilayer structure body 53 is directed to the absorption chamber 31 and the processes below step S05 are conducted.

Hereinafter, two results of the nuclide transmutation experiments, that is, the results of the example five and example six, which were conducted by repeating the same experiment for two times in line with the nuclide transmutation method according to the second modified example of the present embodiment are described.

The analysis of XPS obtained in the example five and example six indicated that Sr (the atomic number Z = 38) on the multilayer structure body 32 has been decreased with the passage of time, and Mo (molybdenum, Z = 42) has been increased as shown by the Mo spectrum of XPS in Fig. 12.

The calculation of the number of atoms of Sr and Mo from the XPS spectrum of Sr and Mo are conducted by the same method as that in the first embodiment.

That is, it is assumed that the intensity of the X-ray irradiated on the multilayer structure body 32 from the X-ray gun during XPS measurement is constant and that the regions irradiated by X-ray for the measurements in example five and example six are the same.

Furthermore, it is also assumed that the region on the multilayer structure body 32 irradiated by X-rays is, for example, a circle with a diameter of 5 mm and that the measurable surface thickness by XPS is $20 \times 10^{-10}$ m from the estimation of the depth of the photoelectrons escaped from the surface.

The number of atoms of Pd is assumed to be $3 \times 10^{15}$ based on the intensity peak of the Pd spectrum obtained by XPS, assuming that the Pd constituting the Pd substrate is composed of a face centered cubic (fcc) crystal.

The number of atoms of each elements is calculated by comparison of the peak intensity of each element with the peak intensity of the Pd spectrum obtained by XPS, with reference to the ionization cross section of each element, that is, the ratio of inner-shell electrons excited by absorbing X-rays.

As shown in Fig. 13, it has been observed that, in example five, the number of atoms of $1.2 \times 10^{14}$ of Sr present at the initial condition is reduced to $1.0 \times 10^{14}$ after 80 hours, and further reduced to $8 \times 10^{13}$ after 400 hours.

In contrast, it was observed that $2.2 \times 10^{13}$ atoms of Mo, which were not present before starting the experiment, were observed after 80 hours, and the number of atoms of Mo was increased to $3.2 \times 10^{13}$ after 240 hours, and was further increased to $3.8 \times 10^{13}$ after 400 hours.

Similarly, in experiment six shown in Fig. 14, the same tendency as the case of example five was observed. That is, the number of Sr atoms is reduced with the passage of time, and generation and an increase of number of Mo atoms, which is not present at the initial condition, are observed.

Furthermore, in both examples five and six, since the time dependent reduction number of Sr atoms approximately conforms with the time dependent increasing number of Mo atoms, this tendency is interpreted to mean that the nuclide transmutation occurs from Sr to Mo. Consequently, it is possible to mention that the experiments in both examples 5 and 6 yield reproducible results.

In addition, in example five, the isotopic ratio of Mo generated by the experiment is calculated through an analysis of the surface of the multilayer structure body 32 using SIMS (Secondary Ion Mass Spectroscopy) after the above-described step S10.

As shown in Fig. 16, the isotopic ratio of Mo observed in example five when compared to that of the isotopic ratio of the natural Mo (see Fig. 15) indicates that a particular isotope of Mo, that is, $^{96}$Mo, shows a dramatically high abundance ratio.

As shown in Fig. 17, the isotopic ratio of the natural Sr added to the multilayer structure body 32 indicated that a particular isotope of Sr, that is, $^{88}$Sr, shows a remarkably high abundance ratio. The above results clearly indicate that there is a strong correlation between the isotopic ratio of a nuclide (Sr) that undergoes nuclide transmutation and the isotopic ratio of the material (Mo) observed after the experiment, so that it can be concluded that the Mo detected in examples five and six is generated by the nuclide transmutation of Sr.

Furthermore, the experimental results of examples five and six are quite well explainable by the above-mentioned EINR model, and it is possible to explain that $^{96}$Mo is formed by the reaction shown in equations (2) and (6), which is described later.

Note that the letter symbol of $\beta^-$ decay, that is, the decay of $^{96}Sr$ ( $=^{88}Sr +4^2n$) towards $^{96}Mo$, is omitted.

$$\ce{^{88}_{38}Sr} + 4\ce{^2_0n} \rightarrow \ce{^{96}_{42}Mo} \qquad (6)$$

In fact, the nuclide transmutation device 30 can comprise either the structure body 32 or 102 which has been previously bound with a material that will undergo nuclide transmutation, for example, with device 60 or 70, or the structure body 11, 89 or 72 that will be covered with a material that will undergo nuclide transmutation and will also perform transmutation. In the latter case, the nuclide transmutation device 30 would be equipped with such a binding device 60, 70 or else.

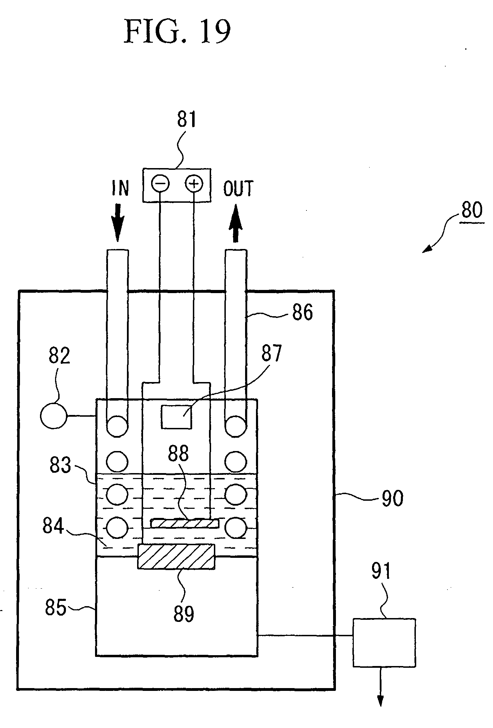

Below, the nuclide transmutation device and nuclide transmutation method according to an embodiment not part of the present invention will be explained referring to the figures 18 and 19.

Fig. 18 is a drawing for explaining the principle of the nuclide transmutation method according to the second embodiment of the present invention. Fig. 19 is a structural scheme of the nuclide transmutation device according to the second embodiment of the present invention.

As shown, for example, in Fig. 18, the device 70 for realizing the nuclide transmutation method according to the present embodiment comprises an anode 71 of platinum and the like, a cathode 72 comprising palladium (Pd) or a Pd alloy, or another metal that can absorb hydrogen (for example, Ti and the like), or an alloy thereof, a heavy water solution 73 into which the cathode 71 and one surface of the cathode 72 are immersed, an electrolyte cell 74 made fluid-tight by the cathode 72 and filled with the heavy water solution that includes material that undergoes the nuclide transmutation, and a vacuum container 75 sealed air-tight by the anode 72, and wherein a flow of deuterium is generated in the cathode 72 by one surface 72A side of the cathode 72 being made a region having a high deuterium pressure due to electrolysis and the like, and the other surface 72B side being made a region having a low deuterium pressure due to vacuum evacuation and the like, and the nuclide transmutation is carried out by a reaction between the deuterium and the material that undergoes nuclide transmutation.

Here, the cathode 72 has a structure identical, for example, to the structure body 11 shown in Fig. 2, and preferably, a mixed layer 22 of a material having a relatively low work function, that is, a material that emits electrons easily (for example, a substance having a work function less than 3 eV), and Pd is formed on the surface of the Pd substrate 23, and the Pd layer 21 is formed by lamination on the surface of this mixed layer 22.

As shown in Fig. 19, the nuclide transmutation device 80 according to the present embodiment comprises a power source 81, an electrolytic cell 83 providing a voltmeter 82, an electrolytic solution 84 stored in the electrolyte cell 83, a vacuum container 85, a spiral refrigerating tube 86 made, for example, of an insulating resin that freezes the electrolytic solution 84 in the electrolyte cell 86, a catalyst 87, an anode electrode 88 of platinum and the like that is connected to the anode of the power source 81 and is immersed in the electrolytic solution 84, a multilayer structure body 89 that maintains the electrolyte cell 83 in a liquid-tight condition and at the same time maintains the vacuum container 85 in an air-tight state and is connected to the cathode of the power source 81, a thermostat 90 that accommodates the electrolyte cell 83 and the vacuum container 85 and controls the temperature, and a vacuum exhaust pump 91 that places the vacuum container 85 in a vacuum state.

Here, the electrolyte cell 83 made, for example, of an insulating resin and the vacuum container 85 made, for example, of stainless steel, are sealed in liquid-tight and air-tight states by the multilayer structure body 89 via, for example, a Culret's O-ring, and so to speak, connected via the multilayer structure body 89.

In addition, the electrolyte solution 84 stored in the electrolyte cell 83 is a heavy water solution that includes, for example, cesium (Cs) as a material that undergoes nuclide transmutation. This electrolyte solution 84 may be a $Cs_2$ ($SO_4$) heavy water solution having a concentration, for example, of 3.1 mol / L.

Moreover, the catalyst 87 is formed by electrodepositing platinum black on platinum, water is produced from most of the hydrogen and oxygen generated by the electrolysis of the electrolytic solution 84, and this is returned to the electrolyte solution 84.

The nuclide transmutation device according to the present embodiment provides the structure described above, and next the method of carrying out nuclide transmutation using this nuclide transmutation device 80 will be explained referring to the figures.

First, the structure body 11 is produced in a manner identical to the step S01 to step S03 in the nuclide transmutation method in the above-described first embodiment.

In addition, this structure body 11 serves as the multilayer structure body 89, the Pd layer 12 of the multilayer structure body 89 is faced towards the electrolytic cell 83 side, and the electrolytic cell 83 and the vacuum container 85 are sealed in respectively liquid-tight and air-tight states (step S21).

Next, a $Cs_2(SO_4)$ heavy water solution having a concentration, for example, of 3.1mol / L is injected as an electrolytic solution 84 in the electrolytic cell 83. Furthermore, the space in the electrolytic cell 83 not filled by the electrolytic solution 84 is filled with nitrogen gas and sealed, and the pressure in the electrolytic cell 83 is maintained at, for example, 1.5 kg / cm² (step S22).

In addition, the vacuum container 85 is evacuated by the vacuum pump 91, and maintained in a vacuum state (step S23).

Additionally, a refrigerant is supplied to the refrigerant pipe 86 made of an insulating resin and the like, and the temperature in the electrolytic cell 83 is maintained at a predetermined constant temperature (step S24).

In addition, the anode electrode 88 made, for example, of platinum, and the multilayer structure body 89 serving as the cathode, which are immersed in the electrolytic solution 84 in the electrolytic cell 83, are connected to the power source 81, and the electrolytic reaction is generated by the power supplied from the power source 81 (step S 25).

Here, the current supplied during the electrolysis is gradually raised from 1A to 2A over a three hour interval, and subsequently maintained at 2A.

In addition, after commencement of the electrolysis, the temperature of the thermostat 90 is set to 70° C after 12 hours, and the temperature is thereafter maintained at this temperature (step S26).

This electrolysis is suspended after a predetermined time interval, for example, seven days, and the temperature of the thermostat 90 is set to room temperature (step S27).

In addition, the multilayer structure body 89 that has been at least partly transmuted is extracted from the nuclide transmutation device 80, and the surface of the multilayer structure body 89 is analyzed by secondary ion mass spectroscopy (SIMS) (step S28).

For example, the nuclide transmutation device 80 comprises the binding device 70 and means to perform the nuclide transmutation.

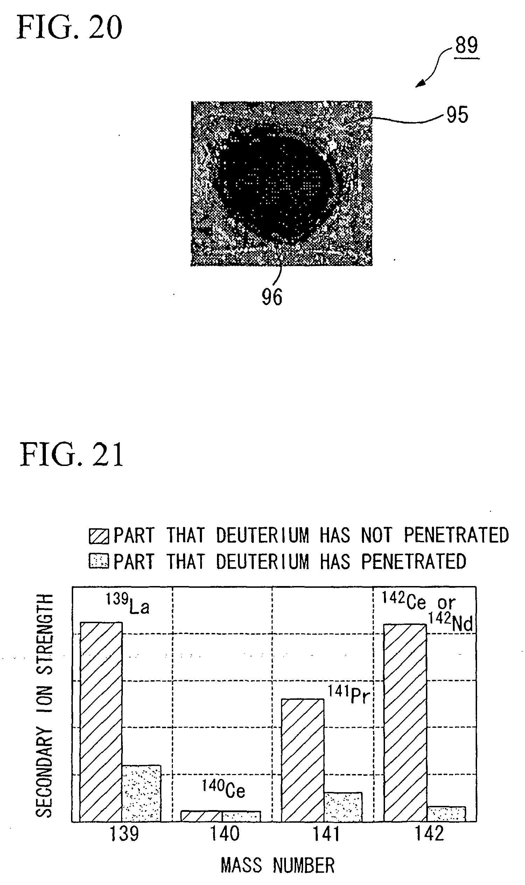

Below, the results of experiments using the nuclide transmutation experiment carried out by using the nuclide transmutation method according to the embodiment described above, that is, example seven, are explained referring to Fig. 20 and Fig. 21.

Fig. 20 is a drawing showing the surface on the electrolyte cell side of the multilayer structure body 89 that has been at least partly transmuted after experiments using the nuclide transmutation device shown in Fig. 19, and Fig. 21 is a graph showing the results of the SIMS analysis of the surface of the multilayer structure body 89 that has been at least partly transmuted after experiments using the nuclide transmutation device shown in Fig. 19.

With respect to a part 96 of the multilayer structure body 89 that has been at least partly transmuted shown in Fig. 20 that the deuterium penetrates and a part 95 of the multilayer structure body 89 that has been at least partly transmuted shown in Fig. 20 that the deuterium does not penetrate, as shown in Fig. 21, for $^{140}Ce$ the intensities of secondary ions agree, but for $^{139}La$ and $^{141}Pr$, the part not penetrated by the deuterium, that is, the part in which the nuclide transmutation reaction was produced, the intensity of the secondary ions became large.

In addition, although it is not possible to distinguish whether the mass number A = 142 is $^{142}Ce$ or $^{142}Nd$, the intensity of the secondary ions became large in the part 96 that the deuterium penetrated.

Thereby, it can be concluded that at least $^{141}Pr$ is a substance formed by the nuclide transmutation of Cs.

As described above, according to the nuclide transmutation device 80 of the present embodiment, a relatively large-scale device such as a nuclear reactor or accelerator are unnecessary, and the nuclide transmutation process can be carried out with a relatively small-scale structure.

Furthermore, while the structure differs from the nuclide transmutation device 30 according to the first embodiment described above, experimental results were obtained showing that the nuclide transformation reaction from Cs to Pr is produced, and the effectiveness of the essential means of the present invention can be shown.

In addition, according to the nuclide transmutation method of the present embodiment, in the multilayer structure body 89, from a comparison of the part 96 that the deuterium penetrated and the part 95 that the deuterium did not penetrate, it can be reliably shown that at least a nuclide transmutation reaction from Cs to Pr is produced.

Moreover, in the present embodiment, a heavy water solution that includes a material that undergoes the nuclide transmutation was used as the electrolyte solution 84, but the invention is not limited thereby, and on one surface of the multilayer structure body 89, a substance that undergoes nuclide transmutation, for example Cs can be laminated by a film formation process such as vacuum deposition or sputtering, and the surface on which this Cs is laminated is faced towards the electrolytic cell 83, and immersed in an electrolytic solution 84 comprising the heavy water solution stored in the electrolytic cell 83. In this case, including a substance, for example, Cs, that undergoes nuclide transmutation in the heavy water solution is not necessary.

Moreover, in the present embodiment described above, the heavy water solution that includes Cs as the electrolyte solution 84 is used, but the invention is not limited thereby, and instead of Cs, another material such as sodium (Na) can be added as the material that undergoes the nuclide transformation.

Below, as a modified example of the present embodiment, the case in which sodium (Na) is added to the heavy water solution as the material that undergoes the nuclide transmutation will be explained.

In this modified example, the major point of difference with the second embodiment described above is the processing from step S22 and subsequent steps, as described above.

Specifically, after the above-described step S21, only, for example, 400 ppm of sodium is added as the electrolyte solution 84 in the electrolyte cell 83, and LiOD heavy water solution having a concentration of 4.3 mol / L is injected.

Furthermore, the contents of the space not filled by the electrolyte solution 84 in the electrolyte cell 83 is filled with nitrogen gas and sealed, and the pressure in the electrolyte cell 83 is maintained at, for example, 1.5 kg / cm$^2$ (step S32).

In addition, the inside of the vacuum container 85 is evacuated by the vacuum pump 91, and is maintained in a vacuum state (step S33).

Additionally, a refrigerant is supplied into the refrigeration tube 86 made, for example, from an insulating resin, and the temperature in the electrolyte cell 83 is maintained at a predetermined constant temperature (step S34).

In addition, the anode electrode 88 that is made from platinum and the like and immersed in the electrolyte solution 84 in the electrolyte cell 83 and the multilayer structure body 89 serving as a cathode are connected to the power source 81, and an electrolytic reaction is produced due to the power supplied from the power source 81 (step S35).

Here, the current supplied during electrolysis is gradually raised over, for example, a six hour interval from 0.5 A to 2 A, and subsequently maintained at 2A.

In addition, this electrolysis is suspended after a predetermined interval, for example, after continuing for seven days, and the temperature of the thermostat 90 is set to room temperature (step S36).

Additionally, the multilayer structure body 89 is extracted from the nuclide transmutation device 80, and the surface of the multilayer structure body 89 is analyzed using electron probe microanalysis (EPMA) (step S 37).

Below, the experimental results of three nuclide transmutation experiments carried out using the nuclide transmutation method according to the modified examples of the second embodiment of the present invention described above, that is, example eight, example nine, and example ten, which are the same experiment carried out three times.

Moreover, in the following Table 2, for example eight, example nine, and example ten, the results of the analysis of the electrolyte solution 84 using inductive coupled plasma - Auger electron spectrometry (ICP-AES) are shown. Moreover, the results of analysis of the electrolyte solution 84 before the commencement of the experiments are shown as comparative examples.

Table 2

| | | Comparison example | Example six | Example seven | Example eight | |
|---|---|---|---|---|---|---|
| Na | | 430 | 25 | 16 | 56 | (ppm) |
| | | 0.086 | 0.005 | 0.003 | 0.011 | (g) |
| | | $2.3 \times 10^{21}$ | $1.3 \times 10^{20}$ | $8.4 \times 10^{19}$ | $2.9 \times 10^{20}$ | (Atoms) |
| Al | | <1 | 410 | 420 | 310 | (ppm) |
| | | $<2 \times 10^{-4}$ | 0.082 | 0.084 | 0.062 | (g) |
| | | $<2 \times 10^{18}$ | $1.8 \times 10^{21}$ | $1.9 \times 10^{21}$ | $1.4 \times 10^{21}$ | (Atoms) |

As shown in Table 2, in the electrolyte solution 84 before the commencement of the experiments, the Na was at 430 ppm, and Al was equal to or less than the detection limit of 1 ppm.

In contrast, after the nuclide transmutation experiment, the Na became several tens of ppm, a value being one order lower, and the Al had become several tens of a ppm. The change in the electrolyte solution 84 after the commencement of the experiment carried out only electrolysis by providing current from the power source 81, and other materials were not introduced from the outside.

In addition, regarding the number of atoms (Atom, in Table 2), it could be confirmed that the decreased number of Na atoms fell from $2.2 \times 10^{21}$ to about $2.0 \times 10^{21}$, and the increased amount of the Al substantially agreed with this.

This result is represented by the above Formula (2) and the following Formula (7) in the EINR model described above.

$$_{11}^{23}Na + 2\,_0^2 n \rightarrow\,_{11}^{27}Na \xrightarrow{\beta^-}\,_{12}^{27}Mg \xrightarrow{\beta^-}\,_{13}^{27}Al \qquad (7)$$

Here, for Na, the natural abundance of $^{23}$Na is 100%, and for A1, the natural abundance of $^{27}$Al is 100%. It can be inductively determined from past experimental data that nuclide transmutation is easily produced between nuclides having similar isotopic ratio compositions, and it can be inferred that the possibility that Na transmutes to A1 is high since the isotopes that exists stably for both elements Na and A1 are unique.

In addition, as a result of analysis of the multilayer structure body 89 using EPMA, Al was detected from the central part of the multilayer structure body 89, that is the part that the deuterium penetrated. Because Al is an amphoteric metal, it can be electrolyzed in the electrolytic solution 84, but by detecting Al from the center part of the surface of the multilayer structure body 89, we can conclude that Al was produced by the nuclide transmutation of Na.

Moreover, in the present embodiment, a heavy water electrolyte solution that includes a material that undergoes the nuclide transmutation is used, but the invention is not limited thereby, and on one of the surfaces of the multilayer structure body 89, a material that undergoes nuclide transmutation, for example, Na, can be laminated using a film formation method such as vacuum deposition or sputtering, the surface on which this Na has been laminated can be faced towards the inside of the electrolytic cell 83, and this can be immersed in the electrolytic solution 84 comprising the heavy water solution stored in the electrolyte cell 83. In this case, it is not necessary to include a material that undergoes the nuclide transmutation in the heavy water solution, that is, Na.

Below, the nuclide transmutation device and the nuclide transmutation method according to the third embodiment of the present invention are explained with reference to the attached drawings.

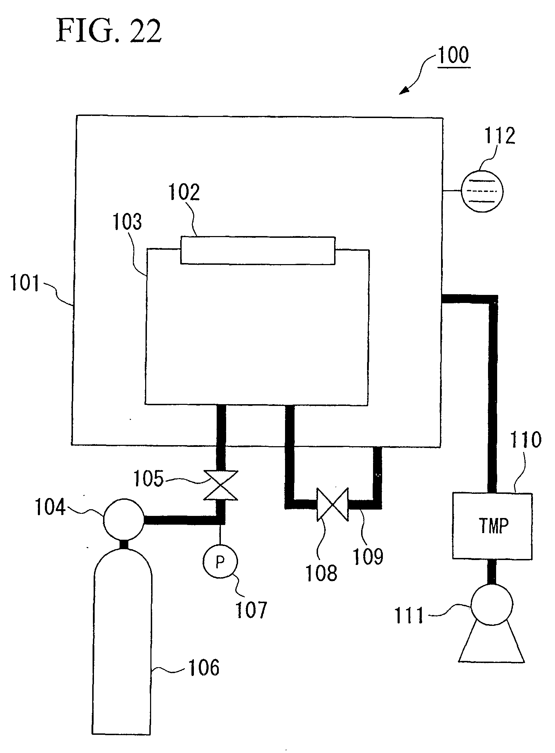

Fig. 22 shows a structure of the nuclide transmutation device 100 according to another embodiment not part of the present invention.

The nuclide transmutation device 100 according to this embodiment comprises a desorption chamber 101 having an interior that can be maintained in an airtight state, an absorption chamber 103, disposed inside of the desorption chamber 101 and having an interior that can be maintained in an airtight state through a multilayer structure body 102, a deuterium tank 106 for supplying deuterium into the absorption chamber 103 through a regulator valve 104 and a valve 105, a pressure meter 107 for detecting the inside pressure of the absorption chamber 103, a connecting pipe 109 for connecting the desorption chamber 101 and an absorption chamber 103 through a vacuum valve 108, a turbo-molecular pump 110 for maintaining the inside of the desorption chamber 101, a rotary pump for preliminary evacuation of the desorption chamber 101, the absorption chamber 103, and the turbo-molecular pump 110, and a vacuum gauge 112 for detecting the degree of vacuum in the desorption chamber 101.

The nuclide transmutation method using the above-described nuclide transmutation device 100 according to this embodiment will be described below with reference to the attached drawings.

First, a platinum substrate 23 (for example, having a size of 70 mm in diameter and 0.1 mm in thickness and a purity of more than 99.9%) shown in, for example, Fig. 2, is degreased by ultrasonic cleaning in acetone over a predetermined time. Then, the substrate is heat treated, that is, annealed at a temperature of, for example, 900°C, in an argon atmosphere (step S42).

Subsequently, the platinum substrate 23, after the annealing process, is subjected to etching, for example, using a 1.5 times diluted aqua regia at room temperature for a predetermined time (for example, 100 seconds) to remove impurities on the substrate surface (step S43).

Next, similarly to the above-described step S03, a multilayer structure body is formed by depositing films on the platinum substrate 23 after the etching process by a sputtering method using an argon beam.

Furthermore, a multilayer structure body 102 is formed by addition of a Cs layer that undergoes nuclide transmutation on the film deposited surface of the multilayer structure body 11 by electrolysis of the $D_2O$ diluted solution of $CsNO_3$ ($CsNO_3/D_2O$ solution) (step S44).

The desorption chamber 103 and the absorption chamber 101 are closed, so as to be airtight after the Cs layer of the multilayer structure body 102 is directed towards the absorption chamber 103. Then, the valve 105 is closed, the vacuum valve 108 in the connecting pipe 109 is opened, and the desorption chamber 101 and the absorption chamber 103 are evacuated using the rotary pump 111 and the turbo-molecular pump 110 (step S45).

Subsequently, after the multilayer structure body 102 is heated to, for example, 70°C by a heating device (not shown), the vacuum valve 108 is closed and evacuation of the absorption chamber 103 is stopped. Then, deuterium gas is introduced into the absorption chamber 103 at a predetermined pressure and the experiment of the nuclide transmutation is commenced. The predetermined pressure at the time of introducing the deuterium gas is regulated by the regulator valve 104, and the pressure is determined, for example, to be $1.01325 \times 10^5$Pa (1 atm) (step S46).

The amount of the deuterium gas discharged in the desorption chamber 101 is calculated based on the degree of vacuum detected by, for example, the vacuum gauge 112 and the flow rate of the turbo-molecular pump 110.

Several tens of hours after starting the introduction of the deuterium gas in the absorption chamber 103, the temperature of the multilayer structure body 102 is returned to room temperature. The valve 105 is closed and after stopping the introduction of the deuterium gas into the absorption chamber 103, the absorption chamber 103 is evacuated and the nuclide transmutation experiment is completed (step S47).

The multilayer structure body 102 is taken out from the nuclide transmutation device 100 and the multilayer structure body 102 is etched by aqua regia for preparing a solution which contains the elements present on the surface of the multilayer structure body 102. This solution is analyzed by a ICP-MS (Inductive Coupled Plasma - Mass spectrometry) for quantitative analysis of the elements present on the surface of the multilayer structure body 102 (step S48).

Below, the results of two repeated experiments by the same method, that is, the experiments 11 and 12, based on the same nuclide transmutation method according to the above-described embodiment of the present invention are described.

In the following Table 3, the results of the ICP-MS analyses for two samples obtained in the examples eleven and twelve are described.

Table 3.

|  | Pr | Cs |
|---|---|---|
| Example eleven | 1.3 μg | 2.3 μg |
| Comparative Example | 0.008 μg | 3.8 μg |
| Example twelve | 0.12 μg | - |

As shown in Table 3, it was found that the contents of Pr and Cs were 0.008 μg and 3.8 μg, respectively, in the solution of the comparative example, which is obtained from the multilayer structure body 102 before starting the experiments.

In contrast, after the experiments of the nuclide transmutation, the content of Pr is increased to 1.3 μg, which is more than 100 times greater than the initial weight, and the content of Cs is decreased to 2.3 μg.

In the example twelve, the content of Pr increases to 0.12 μg, which corresponds to a weight more than ten times greater than the initial weight.

Consequently, it is concluded that the above results indicate that the increase of Pr observed in examples eleven and twelve is caused by the nuclide transmutation from Cs to Pr.

As described above, although the nuclide transmutation device 100 according to the present invention has a relatively small-scale structure, it is confirmed that the present nuclide transmutation device is able to carry out nuclide transmutation instead of using large scale systems such as a nuclear reactor or a particle accelerator.

In addition, in spite of the fact that the present nuclide transmutation device and the multilayer structure body differ from the nuclide transmutation device 30 and the multilayer structure body according to the first embodiment, both nuclide transmutation devices and multilayer structure bodies are confirmed to be able to carry out the nuclide transmutation such as from Cs to Pr successfully, which results in showing the substantial effectiveness of the present invention.

In addition, in the first embodiment, the second embodiment, and the third embodiment of the present invention described above, palladium (Pd) was used as the metal for absorbing the hydrogen, but the invention is not limited thereby, and a Pd alloy, or, for example, another metal that absorbs hydrogen, such as Ti, Ni, V, or Cu, or an alloy thereof can be used.

As explained above, according to the present invention, nuclide transmutation can be carried out with a relatively small-scale device compared to the large-scale devices such as accelerators and nuclear reactors, a pressure differential in the deuterium between the one surface and the other surface of the structure body is provided, and within the structure body a flux of deuterium from one surface side to the other surface side is produced, and thereby an easily reproducible nuclide transmutation reaction can be produced for the deuterium and the material that undergoes nuclide transmutation.

Furthermore, according to a second aspect, the absorption part is pressurized by the deuterium supply device, and at the same time, the pressure in the radiation part is reduced to a vacuum state by the exhaust means, and thus a pressure differential in the deuterium is formed in the structure body.

Furthermore, according to a third aspect, by electrolyzing the electrolytic solution on one surface of the structure body with the structure body serving as a cathode, deuterium is absorbed effectively into the structure body due to the high pressure, and by reducing the pressure of the radiation part to a vacuum state using the exhaust device, a pressure differential in the deuterium is formed in the structure body.

Furthermore, according to a fourth aspect, the transmutation material lamination device can laminate the material that undergoes the nuclear transmutation on one surface of the structure body by a surface forming process, such as electrodeposition, vapor deposition, or sputtering.

Furthermore, according to a aspect, the material that undergoes nuclide transmutation can be bound to one surface of the structure body by mixing the material that undergoes nuclide transmutation in, for example, a gas or liquid that includes deuterium.

Furthermore, according to a sixth aspect, a mixed layer that includes a material having a low work function is provided on the structure body that serves as the multilayer structure, and thereby the repeatability of the production of the nuclide transmutation reaction is improved.

Moreover, according to the present invention, the production of the nuclide transmutation reaction can be further promoted by transmuting the material that undergoes nuclide transmutation to a nuclide having a similar isotope ratio composition, and the repeatability of the generation of the nuclide transmutation reaction can be improved.

In addition, according to a seventh aspect, a flux of deuterium from the one surface side to the other surface side within the structure body is produced, and thereby the nuclide transmutation reaction is produced with good repeatability for the deuterium and the material that undergoes nuclide transmutation.

Furthermore, according to an eighth aspect, a material that undergoes nuclide transmutation is laminated on the one surface of the structure body by a film formation process using a transmutation material lamination process such as electrodeposition, vaporization deposition, or sputtering, or the material that undergoes nuclide transmutation is mixed with a gas or liquid that includes deuterium and the like, and thereby the material that undergoes the nuclide reaction is bound to the one surface of the structure body.

Furthermore, according to a ninth aspect, the material that undergoes nuclide transmutation is transmuted to a nuclide having a similar isotopic ratio composition, and thereby the nuclide transmutation reaction can be promoted, and the repeatability of the generation of the nuclide transmutation reaction can be improved.

**Claims**

1. A nuclide transmutation device (30 ; 100) for achieving a nuclide transmutation, comprising:

   a multilayer structure body (32, 102); that is made of palladium or a palladium alloy, or a hydrogen absorbing metal other than palladium, or a hydrogen absorbing alloy other than a palladium alloy,
   an absorption part (31 ; 103) and a desorption part (34 ; 101) that are disposed so as to surround said multilayer structure body (32, 102) on the sides and form a closed space that can be sealed by said multilayer structure body (32, 102);
   a high pressurization device (33, 35 ; 104, 105, 106, 107) that produces a relatively high pressure of deuterium at said absorption part (31 ; 103) on the side (52, 53) of the surface of said multilayer structure body (32, 102); and
   a low pressurization device (38, 39 ; 110, 111) that produces a relatively low pressure of deuterium at said desorption part (34 ; 101) on the other side (11B ; 23) of the surface of said multilayer structure body (32, 102),
   **characterized in that**
   said multilayer structure body (32, 102) includes:

   i) a base material (23) including a hydrogen absorbing metal or a hydrogen absorbing alloy;
   ii) a mixed layer (22) formed on said base material (23) and comprising a hydrogen absorbing metal or a hydrogen absorbing alloy (56), and a material (57) having a low work function that allows emission of electrons equal to or less than 3 eV;
   iii) a surface layer (21) formed on said mixed layer (22) and comprising a hydrogen absorbing metal or a hydrogen absorbing alloy; and
   iv) an additional layer (52, 53) bound on the surface of said surface layer (21) and that undergoes nuclide transmutation,

   said high pressurization device (33, 35 ; 104, 105, 106, 107) includes a deuterium gas supply device (35, 106) configured to supply the deuterium gas into said absorption part (31, 103) so that said additional layer (52, 53) that undergoes nuclide transmutation is exposed to the deuterium gas and a flow of the deuterium that penetrates through the multilayer structure body (32, 102) is provided.

2. A nuclide transmutation device according to claim 1, wherein said additional layer (52, 53) that undergoes nuclide transmutation includes at least one of Cs, C, Sr and Na.

3. A nuclide transmutation device according to claim 1 or 2, wherein said low pressurization device comprises an exhaust device (38, 39 ; 110, 111) which evacuates said desorption part (34 ; 101).

4. A nuclide transmutation device according to any one of claims 1 to 3, wherein said base material (23) is formed by Pd, said mixed layer (22) is formed by Pd and a material
   having a work function equal to or less than 3 eV, and said surface layer (21) is formed by Pd.

5. A nuclide transmutation device according to any one of claims 1 to 4, wherein said mixed layer (22) comprises layers of Pd and layers of CaO that are laminated alternately.

**6.** A nuclide transmutation device according to any one of claims 1 to 5, wherein a heating device for controlling the temperature of the multilayer structure body (32, 102) is provided.

**7.** A nuclide transmutation method using the nuclide transmutation device according to any one of claims 1 to 6, comprising the step of:

a low pressurizing process that brings about a state in which the pressure of the deuterium is relatively low on the other surface side (11B ; 23) of said multilayer structure body (32, 102),
**characterized in that**
the method further comprises a high pressurizing process of supplying a deuterium gas from said deuterium gas supply device (35, 106) into said absorption part (31, 103) so that the surface of said additional layer (52, 53) that undergoes nuclide transmutation is exposed to the deuterium gas, and
providing a flow of the deuterium that penetrates through the multilayer structure body (32, 102).

**Patentansprüche**

**1.** Nuklidtransmutationsvorrichtung (30; 100) zum Erzielen einer Nuklidtransmutation, umfassend:

einen mehrschichtigen Strukturkörper (32, 102), der aus Palladium oder einer Palladiumlegierung oder einem anderen wasserstoffabsorbierenden Metall als Palladium oder einer anderen wasserstoffabsorbierenden Metalllegierung als einer Palladiumlegierung hergestellt ist,
ein Absorptionsteil (31; 103) und ein Desorptionsteil (34; 101), die so angeordnet sind, dass sie den mehrschichtigen Strukturkörper (32, 102) an den Seiten umgeben und einen geschlossenen Hohlraum bilden, der durch den mehrschichtigen Strukturkörper (32, 102) abgedichtet werden kann,
eine Hochdruckbeaufschlagungsvorrichtung (33, 35; 104, 105, 106, 107), die an der Seite (52, 53) der Oberfläche des mehrschichtigen Strukturkörpers (32, 102) einen relativ hohen Deuteriumdruck an dem Absorptionsteil (31; 103) erzeugt, und
eine Unterdruckbeaufschlagungsvorrichtung (38, 39; 110, 111), die an der anderen Seite (11B; 23) der Oberfläche des mehrschichtigen Strukturkörpers (32, 102) einen relativ niedrigen Deuteriumdruck an dem Desorptionsteil (34; 101) erzeugt,
**dadurch gekennzeichnet, dass**
der mehrschichtige Strukturkörper (32, 102) umfasst:

i) ein Basismaterial (23), das ein wasserstoffabsorbierendes Metall oder eine wasserstoffabsorbierende Legierung umfasst,
ii) eine Mischschicht (22), die auf dem Basismaterial (23) ausgebildet ist und die ein wasserstoffabsorbierendes Metall oder eine wasserstoffabsorbierende Legierung (56) und ein Material (57) umfasst, das eine niedrige Austrittsenergie aufweist, die die Emission von Elektronen gleich oder kleiner 3 eV erlaubt,
iii) eine Oberflächenschicht (21), die auf der Mischschicht (33) ausgebildet ist und die ein wasserstoffabsorbierendes Metall oder eine wasserstoffabsorbierende Legierung umfasst, und
iv) eine zusätzliche Schicht (52, 53), die an der Oberfläche der Oberflächenschicht (21) gebunden ist und die einer Nuklidtransmutation unterzogen wird,

wobei die Hochdruckbeaufschlagungsvorrichtung (33, 35; 104, 105, 106, 107) eine Deuteriumgaszuführvorrichtung (35, 106) umfasst, die dazu ausgelegt ist, Deuteriumgas so in den Absorptionsteil (31, 103) zuzuführen, dass die zusätzliche Schicht (52, 53), die einer Nuklidtransmutation unterzogen wird, dem Deuteriumgas ausgesetzt ist und ein Deuteriumstrom, der durch den mehrschichtigen Strukturkörper (32, 102) fließt, bereitgestellt wird.

**2.** Nuklidtransmutationsvorrichtung nach Anspruch 1, wobei die zusätzliche Schicht (52, 53), die einer Nuklidtransmutation unterzogen wird, wenigstens eines von Cs, C, Sr und Na umfasst.

**3.** Nuklidtransmutationsvorrichtung nach Anspruch 1 oder 2, wobei die Unterdruckbeaufschlagungsvorrichtung eine Absaugvorrichtung (38, 39; 110, 111) umfasst, die das Desorptionsteil (34; 101) entleert.

4. Nuklidtransmutationsvorrichtung nach einem der Ansprüche 1 bis 3, wobei das Basismaterial (23) aus Pd gebildet ist, die Mischschicht aus Pd und einem Material gebildet ist, das eine Austrittsenergie aufweist, die gleich oder kleiner 3 eV ist, und die Oberflächenschicht (21) aus Pd gebildet ist.

5. Nuklidtransmutationsvorrichtung nach einem der Ansprüche 1 bis 4, wobei die Mischschicht (22) Schichten aus Pd und Schichten aus CaO umfasst, die alternierend laminiert sind.

6. Nuklidtransmutationsvorrichtung nach einem der Ansprüche 1 bis 5, wobei eine Wärmevorrichtung zum Steuern der Temperatur des mehrschichtigen Strukturkörpers (32, 102) vorgesehen ist.

7. Nuklidtransmutationsverfahren unter Verwendung der Nuklidtransmutationsvorrichtung nach einem der Ansprüche 1 bis 6, umfassend den Schritt:

eines Unterdruckbeaufschlagungsprozesses, der einen Zustand herbeiführt, in dem der Deuteriumdruck auf der anderen Oberflächenseite (11B; 23) des mehrschichtigen Strukturkörpers (32, 102) relativ niedrig ist, **dadurch gekennzeichnet, dass** das Verfahren ferner umfasst einen Hochdruckbeaufschlagungsprozess des Zuführens eines Deuteriumgases von der Deuteriumgaszuführvorrichtung (35, 106) in das Absorptionsteil (31, 103), so dass die Oberfläche der zusätzlichen Schicht (52, 53), die einer Nuklidtransmutation unterzogen wird, dem Deuteriumgas ausgesetzt ist, und Bereitstellen eines Deuteriumstroms, der durch den mehrschichtigen Strukturkörper (32, 102) fließt.


## Revendications

1. Dispositif de transmutation de nuclide (30 ; 100) pour obtenir une transmutation de nuclide, comprenant :

un corps à structure multicouche (32, 102) ; qui est fait de palladium ou d'un alliage de palladium, ou d'un métal absorbant l'hydrogène différent du palladium, ou d'un alliage absorbant l'hydrogène différent d'un alliage de palladium, une partie d'absorption (31 ; 103) et une partie de désorption (34 ; 101) qui sont disposées de manière à entourer ledit corps à structure multicouche (32, 102) sur les côtés et former un espace clos qui peut être fermé par ledit corps à structure multicouche (32, 102) ; un dispositif de mise sous haute pression (33, 35 ; 104, 105, 106, 107) qui produit une pression de deutérium relativement haute au niveau de ladite partie d'absorption (31 ; 103) sur le côté (52, 53) de la surface dudit corps à structure multicouche (32, 102) ; et un dispositif de mise sous basse pression (38, 39 ; 110, 111) qui produit une pression de deutérium relativement basse au niveau de ladite partie de désorption (34 ; 101) sur l'autre côté (11B ; 23) de la surface dudit corps à structure multicouche (32, 102), **caractérisé en ce que** ledit corps à structure multicouche (32, 102) comprend :

i) un matériau de base (23) comprenant un métal absorbant l'hydrogène ou un alliage absorbant l'hydrogène ; ii) une couche mixte (22) formée sur ledit matériau de base (23) et comprenant un métal absorbant l'hydrogène ou un alliage absorbant l'hydrogène (56), et un matériau (57) ayant un faible travail d'extraction permettant une émission d'électrons égal ou inférieur à 3 eV ; iii) une couche de surface (21) formée sur ladite couche mixte (22) et comprenant un métal absorbant l'hydrogène ou un alliage absorbant l'hydrogène ; et iv) une couche supplémentaire (52, 53) liée sur la surface de ladite couche de surface (21) et qui subit une transmutation de nuclide,

ledit dispositif de mise sous haute pression (33, 35 ; 104, 105, 106, 107) comprend un dispositif d'apport de gaz deutérium (35, 106) configuré pour apporter le gaz deutérium dans ladite partie d'absorption (31, 103) de sorte que ladite couche supplémentaire (52, 53) qui subit une transmutation de nuclide est exposée au gaz deutérium et qu'un courant du deutérium qui pénètre dans le corps à structure multicouche (32, 102) est établi.

2. Dispositif de transmutation de nuclide selon la revendication 1, dans lequel ladite couche supplémentaire (52, 53) qui subit une transmutation de nuclide inclut au moins l'un de Cs, C, Sr et Na.

**3.** Dispositif de transmutation de nuclide selon la revendication 1 ou 2, dans lequel ledit dispositif de mise sous basse pression comprend un dispositif d'aspiration (38, 39 ; 110, 111) qui met sous vide ladite partie de désorption (34 ; 101).

**4.** Dispositif de transmutation de nuclide selon l'une quelconque des revendications 1 à 3, dans lequel ledit matériau de base (23) est formé par Pd, ladite couche mixte (22) est formée par Pd et un matériau ayant un travail d'extraction égal ou inférieur à 3 eV, et ladite couche de surface (21) est formée par Pd.

**5.** Dispositif de transmutation de nuclide selon l'une quelconque des revendications 1 à 4, dans lequel ladite couche mixte (22) comprend des couches de Pd et des couches de CaO qui sont alternativement laminées.

**6.** Dispositif de transmutation de nuclide selon l'une quelconque des revendications 1 à 5, dans lequel un dispositif chauffant pour commander la température du corps à structure multicouche (32, 102) est prévu.

**7.** Procédé de transmutation de nuclide utilisant le dispositif de transmutation de nuclide selon l'une quelconque des revendications 1 à 6, comprenant l'étape de :

un processus de mise sous basse pression qui produit un état dans lequel la pression du deutérium est relativement basse sur l'autre côté de surface (11B ; 23) dudit corps à structure multicouche (32, 102),
**caractérisé en ce que**
le procédé comprend en outre un processus de mise sous haute pression d'apport d'un gaz deutérium depuis ledit dispositif d'apport de gaz deutérium (35, 106) dans ladite partie d'absorption (31, 103) de sorte que la surface de ladite couche supplémentaire (52, 53) qui subit une transmutation de nuclide est exposée au gaz deutérium, et
l'établissement d'un courant du deutérium qui pénètre dans le corps à structure multicouche (32, 102).

FIG. 1

FIG. 2

# FIG. 3

# FIG. 4

# FIG. 5A          FIG. 5B

# FIG. 6

# FIG. 7

## FIG. 8

# FIG. 9

# FIG. 10

# FIG. 11

# FIG. 12

FIG. 13

FIG. 14

## FIG. 15

## FIG. 16

## FIG. 17

## FIG. 18

# FIG. 19

## FIG. 20

## FIG. 21

☒ PART THAT DEUTERIUM HAS NOT PENETRATED
☒ PART THAT DEUTERIUM HAS PENETRATED

EP 1 202 290 B1

## FIG. 22

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. IWAMURA ; T. ITOH ; N. GOTOH ; I. TOYODA.** Detection of Anomalous Elements, X-ray, and Excess Heat in a D2-Pd System and its Interpretation by the Electron-Induced Nuclear Reaction (EINR) Model. *Fusion Technology,* 1998, vol. 33 (4), 476